# EUROPÄISCHE PATENTSCHRIFT

(11) **EP 4 403 033 B1**
(45) Veröffentlichungstag und Bekanntmachung des Hinweises auf die Patenterteilung: **11.06.2025**
(21) Anmeldenummer: 23215563.0
(22) Anmeldetag: 11.12.2023
(51) Int. Cl.: A21C 3/02, A21C 11/00

(54) **GEBÄCKFORMMASCHINE UND VERFAHREN ZUR GEBÄCKFORMUNG**
PASTRY FORMING MACHINE AND METHOD OF PASTRY FORMING
MACHINE DE MOULAGE DE PÂTISSERIE ET PROCÉDÉ DE MOULAGE DE PÂTISSERIE

(30) Priorität: 19.01.2023 DE 102023101284
(43) Veröffentlichungstag der Anmeldung: 24.07.2024
(73) Patentinhaber: Kalweit, Andreas, 40219 Düsseldorf (DE)
(72) Erfinder: Kalweit, Andreas, 40219 Düsseldorf (DE)
(74) Vertreter: Klickow & Wetzel PartGmbB

(56) Entgegenhaltungen:
- DE-C- 95 329
- FR-A- 359 899
- US-A- 2 829 606
- DATABASE WPI Week 201809, Derwent World Patents Index; AN 2018-01241T, XP002811494

## Beschreibung

Die Erfindung betrifft eine Gebäckformmaschine zur Formung von Teiglingen, insbesondere zur Formung von Teiglingen in der Lebensmittelindustrie.

Darüber hinaus betrifft die Erfindung ein Verfahren zur Gebäckformung mithilfe einer Gebäckformmaschine.

In der industriellen Lebensmittelproduktion werden zur Formung von Teiglingen Maschinen eingesetzt, mit denen beispielsweise Lebensmittel wie Mürbeteige, Honig- und Sirupteige oder Marzipan formbar sind, die anschließend in weiteren Produktionsschritten, zum Beispiel durch Backen und/oder Überziehen mit Schokolade, zu Endprodukten, wie beispielsweise Kuchen oder Keksen, weiterverarbeitet werden können.

Die Maschinen zur Formung von Teiglingen für Gebäck werden dabei als Gebäckformmaschinen bezeichnet. Es wird dabei zwischen handbetriebenen Gebäckformmaschinen und motorisch betriebenen Gebäckformmaschinen unterschieden.

Die FR 359 899 A offenbart eine Knet- und Walzmaschine für Brotteige etc. aufweisend eine Zuführeinrichtung für Mehl und ein Walzenpaar, wobei der Teig zwischen den zwei Walzen auf einer Platte platt gewalzt wird, die erhöhte Kanten aufweist, um ein Eingreifen des Teiges in den Rahmen oder die Zahnräder der Maschine zu verhindern.

Aus dem Stand der Technik sind bereits Gebäckformmaschinen bekannt, durch die ein zugeführter Teig mithilfe von gegenläufig rotierenden Walzen, von denen eine Walze als eine Knetwalze und die andere Walze als eine Formwalze ausgebildet ist, formbar ist, die geformten Teiglinge mithilfe eines Messers von der Knetwalze schneidbar sind und die geformten Teiglinge mithilfe eines Transportbandes auf ein Backblech transportierbar sind.

Bei bekannten Gebäckformmaschinen ergeben sich häufig Probleme dabei, die geformten Teiglinge von Transporteinrichtungen, wie beispielsweise Förderbändern, vor dem Backen auf Backbleche zu übertragen.

Darüber hinaus sind die bekannten Konstruktionen zum Transport der Teiglinge im Bereich der Gebäckformmaschinen aufwendig und teuer.

Weiterhin ist die Entnahme der Walzen zur Reinigung oder Wartung häufig nicht einfach möglich oder die Lagerung der Walzen neigt zur Korrosion (z.B. Rost).

Darüber hinaus ist die Konstruktion des Messers zum Schneiden der Teiglinge von der Formwalze oft aufwendig oder erfordert einen teuren maschinellen Antrieb.

Auch ist sind die Möglichkeiten zur Verarbeitung verschiedener Teigrezepturen aufgrund der Konstruktionsweise bekannter handbetriebener Gebäckformmaschinen für ebensolche stark eingeschränkt.

Es ist daher eine Aufgabe der Erfindung, eine verbesserte Gebäckformmaschine zu schaffen, die die vorgenannten Probleme zumindest teilweise behebt.

Diese Aufgabe wird erfindungsgemäß durch eine Gebäckformmaschine gemäß Patentanspruch 1 gelöst.

Es ist darüber hinaus eine Aufgabe der Erfindung, ein Verfahren zur Gebäckformung anzugeben, das die vorgenannten Probleme zumindest teilweise behebt.

Diese Aufgabe wird erfindungsgemäß durch ein Verfahren zur Gebäckformung gemäß Patentanspruch 10 gelöst.

In den abhängigen Patentansprüchen werden vorteilhafte Weiterbildungen der Erfindung beansprucht.

Die nachfolgend offenbarten Merkmale einer Gebäckformmaschine und eines Verfahrens zur Gebäckformung sind in allen ausführbaren Kombinationen Bestanteil der Erfindung.

Eine erfindungsgemäße Gebäckformmaschine weist je mindestens eine Zuführeinrichtung, eine Formvorrichtung, eine Schneidevorrichtung und eine Transportvorrichtung auf.

Mithilfe der Zuführeinrichtung ist Teig in den Bereich der Formvorrichtung zuführbar.

In einer Ausführungsform der Erfindung ist die Zuführeinrichtung als ein Teigtrichter ausgebildet, in den der Teig einfüllbar ist.

Die Formvorrichtung weist mindestens eine Knetwalze und mindestens eine Formwalze auf. Die Form- und die Knetwalze weisen jeweils einen zylindrischen oder hohlzylindrischen Grundkörper auf.

Die Knetwalze und die Formwalze sind gegenläufig jeweils um ihre Längsachse rotierbar und in einem gewissen Abstand mit parallelen Rotationsachsen zueinander angeordnet.

Durch die Rotation der Knetwalze ist ein Teigband um deren Mantelfläche ausbildbar, dessen Stärke durch den Abstand von der Knetwalze und der Formwalze bestimmt ist.

Die Formwalze weist im Bereich ihrer Mantelfläche mindestens eine Ausnehmung bzw. Vertiefung auf, die als Form und somit als Negativ für die zu formenden Teiglinge dient. Bevorzugt weist die Formwalze mehrere Formen nebeneinander auf, die sich in Ausführungsformen der Erfindung entlang des Umfanges der Formwalze wiederholen können. Dabei ist die mehrfache Anordnung der gleichen Form ebenso wie die Anordnung von verschiedenen Formen auf einer Formwalze möglich.

Die Knetwalze weist in einer bevorzugten Ausführungsform der Erfindung eine strukturierte Mantelfläche, beispielsweise ausgebildet als parallel zur Rotationsachse verlaufende Rippen auf, sodass der Teig mit der Knetwalze besser transportierbar ist.

Durch die gegenläufige Rotierbarkeit der Formwalze in Relation zur Knetwalze sind auf das um die Knetwalze ausgebildete Teigband erhabene Teigmengen aufbringbar, die Positive der auf der Formwalze angeordneten Form bzw. der Formen sind.

In Rotationsrichtung der Knetwalze hinter der Formwalze ist das Messer der Schneidevorrichtung angeordnet.

Die Schneidevorrichtung weist ein oszillierbares Messer auf, das eine Schneidkante in Längsrichtung der Knetwalze parallel zum nächstliegenden Abschnitt der Mantelfläche der Knetwalze aufweist. Mithilfe des Messers sind die durch die Formen der Formwalze auf das Teigband aufgebrachten Teig-Positive vom Teigband herunterschneidbar.

Die mithilfe des Messers vom Teigband getrennten Teiglinge sind mithilfe der Transportvorrichtung aus dem Bereich der Walzen abtransportierbar.

Die Transportvorrichtung gemäß der Erfindung umfasst mindestens ein Transferblech, auf dem die Teiglinge ablegbar sind, und ist mit einem Antrieb gekoppelt.

Das Transferblech ist gemäß der Erfindung als Backblech verwendbar und/oder mit einem Backpapier belegbar.

Die Gebäckformmaschine weist vorzugsweise eine Führung für Transportbleche auf, mit der sichergestellt ist, dass Transportbleche gerade durch die Gebäckformmaschine hindurch beförderbar sind.

Die mindestens eine Antriebseinheit ist zur gegenläufigen Rotation der Knetwalze und der Formwalze und zum linearen Antrieb des mindestens einen Transportbleches ausgebildet.

In Ausführungsformen der Erfindung weist die Antriebseinheit eine zentrale Antriebswelle auf, mit der der Antrieb der Knetwalze, der Formwalze und der Transportvorrichtung gekoppelt sind.

Das mindestens eine Transportblech weist eine Kopplungseinrichtung zur Kopplung mit der Antriebseinrichtung auf.

Die Kopplungseinrichtung ist in Ausführungsformen der Erfindung als eine Zahnleiste ausgebildet, die mit einem Zahnrad des Antriebs der Antriebseinrichtung gekoppelt ist.

Die Kopplungseinrichtung ist seitlich auf dem oder seitlich an dem Transportblech oder unter dem Transportblech angeordnet. Dadurch wird sichergestellt, dass die Oberseite des Transportblechs im Wesentlichen eine ebene Fläche zur Ablage der Teiglinge bildet.

Die zentrale Antriebswelle ist in Ausführungsformen der Erfindung mit einer Handkurbel verbunden. In diesen Ausführungsformen der Erfindung ist eine handbetriebene Gebäckformmaschine realisiert.

In bevorzugten Ausführungsformen der Erfindung ist die Handkurbel demontierbar. Dies ist insbesondere für den Transport oder die Lagerung der Gebäckformmaschine vorteilhaft, da weniger Raum benötigt wird. Besonders bevorzugt ist die Handkurbel in der Gebäckformmaschine verstaubar, wenn diese nicht betrieben wird.

In vorteilhaften Ausführungsformen der Erfindung ist die Handkurbel wahlweise auf beiden Seiten der zentralen Antriebswelle montierbar, sodass ein komfortabler Betrieb der Gebäckformmaschine je nach lokalen Platzverhältnissen und Benutzerbedürfnissen (z.B. Recht- oder Linkshänder) ermöglicht ist.

In anderen Ausführungsformen der Erfindung ist die zentrale Antriebswelle mit einem Motor, beispielsweise einem Elektromotor, gekoppelt.

Das Schneidwerkzeug und insbesondere die Einstellung des Messers ist bei einer Gebäckformmaschine besonders wichtig, da unterschiedliche Dicken der abgeschnittenen Teiglinge ungleichmäßige Backergebnisse hervorbringen. Dünnere Teiglinge erfahren bei gleicher Backzeit und Backtemperatur eine höhere Wärmeeinwirkung und werden damit intensiver gebacken. Daher muss das Messer für eine gleichbleibende und vorhersehbare Qualität der Produkte während des Schneidevorgangs absolut gerade bleiben und auf der gesamten Ausformungsbreite parallel zur Mantelfläche der Knetwalze und gleichmäßig dick abschneiden.

In einer besonders bevorzugten Ausführungsform der Erfindung ist das Messer mit einer PTFE-Beschichtung versehen.

Das Schneidwerkzeug weist in einer Ausführungsform der Erfindung eine verstellbare und oszillierend antreibbare Messerwelle auf.

Die Schneidkante des Messers verläuft in einer besonders bevorzugten Ausführungsform der Erfindung parallel zur Achse der Messerwelle.

Die Messerwelle ist mithilfe eines Messerantriebs in der Längserstreckungsrichtung der Welle oszillierbar, sodass auch das Messer in Richtung seiner Längserstreckung oszillierbar ist.

Der Messerantrieb ist in einer Ausführungsform der Erfindung mit der Antriebseinheit für die Walzen und/oder die Transportvorrichtung gekoppelt.

In Ausführungsformen der Erfindung weist der Messerantrieb mindestens eine Wellenscheibe auf, durch deren Rotation das Messer linear zur Realisierung der Oszillation antreibbar ist.

Die mindestens eine Wellenscheibe ist in bevorzugten Ausführungsformen der Erfindung aus Gleitlagerkunststoff hergestellt.

Insbesondere im Vergleich mit bekannten handbetriebenen Gebäckformmaschinen wird durch die Oszillation des Messers auch in handbetriebenen Ausführungsformen der Erfindung eine erweiterte Einsetzbarkeit der Gebäckformmaschine auch für fettreichere Teige ermöglicht. Bislang war mit handbetriebenen Gebäckformmaschinen nur die Verarbeitung von fettarmen und trockenen Teigen möglich.

In einer bevorzugten Ausführungsform einer Gebäckformmaschine sind die Messerwelle und damit auch die Schneidkante des Messers parallel zur Drehachse der Knetwalze angeordnet. Die Schneidkante ist weiterhin entgegen der Laufrichtung der Knetwalze ausgerichtet.

In einer besonders bevorzugten Ausführungsform der Erfindung ist das Messer um die Achse der Messerwelle mithilfe einer Schwenkvorrichtung schwenkbar, sodass der Abstand der Schneidkante des Messers von der Manteloberfläche der Knetwalze einstellbar ist. Somit ist eine Einstellbarkeit der Dicke der Teiglinge in Abhängigkeit der Tiefe der Formen der Formwalze ermöglicht, wobei eine Verschwenkung des Messers zur Mantelfläche der Knetwalze hin eine Zunahme der Dicke und eine Verschwenkung des Messers von der Mantelfläche der Knetwalze weg eine Abnahme der Dicke der Teiglinge bedeutet.

In einer besonders bevorzugten Ausführungsform der Erfindung ist die Messerwelle mit einer Exzenterlagerung im Bereich der Gebäckmaschine gelagert, sodass auch nach einer Verschwenkung der Messerwelle bzw. des Messers die Parallelität von der Schneidkante des Messers und der Mantelfläche der Knetwalze gewährleistbar ist.

Die Exzenterlagerung weist dazu bevorzugt eine Verstelleinrichtung zur Einstellung der Lagerposition der Messerwelle auf. Weiterhin ist das Lager der Messerwelle in einer Ausführungsform der Erfindung in einer eingestellten Lagerposition mit Befestigungsmitteln fixierbar.

In einer Ausführungsform der Erfindung weist die Schwenkvorrichtung eine Stellschraube zur Einstellung der Messerposition auf.

In einer weiteren Ausführungsform einer erfindungsgemäßen Gebäckformmaschine weist diese jeweils eine Walzenarretierung für die Formwalze und die Knetwalze auf.

Die Walzenarretierung jeder Walze weist vorzugsweise mindestens eine Fixiereinrichtung auf, mit der jeweils eine Walze derart fixierbar ist, dass die jeweilige Walze eine feste Rotationsachse aufweist.

Die Walzenarretierung weist je Walze vorzugsweise zwei Fixierbolzen auf, mit denen die Walzen beidseitig lagerbar und in der Gebäckformmaschine fixierbar sind.

Die Walzenarretierung weist vorzugsweise Kunststoffgleitlager zur drehbaren Lagerung der Walzen auf. Dadurch sind die Walzen schnell aus der Gebäckformmaschine ausbaubar oder in diese einbaubar und sind sehr hygienisch zu reinigen.

In bevorzugten Ausführungsformen der Erfindung sind im Grundkörper der Gebäckformmaschine Führungsschlitze zur Aufnahme der Fixierbolzen der Walzenarretierung angeordnet. An den geschlossenen Enden der Führungsschlitze befindet sich die Montageposition für die Fixierbolzen, in der die Fixierbolzen am Grundkörper der Gebäckformmaschine fixierbar sind. Durch die Fixierung der Fixierbolzen in der Montageposition sind automatisch die gehalterten Walzen in der Gebäckformmaschine ausgerichtet.

Ein erfindungsgemäßes Verfahren zur Gebäckformung umfasst zumindest die folgenden Verfahrensschritte:
- Zuführen von Teig in die Zuführeinrichtung der Gebäckformmaschine,
- Antreiben der Gebäckformmaschine mithilfe eines Antriebs,
- Einlegen eines Transportbleches in eine Gebäckformmaschine,
- Förderung des Transportbleches durch die Gebäckformmaschine hindurch,
- Formung von Teiglingen mithilfe einer Knetwalze, einer Formwalze und einer Schneidevorrichtung der Gebäckformmaschine,
- Ablegen der Teiglinge auf dem Transportblech.

In Ausführungsformen der Erfindung werden die Knetwalze, die Formwalze und das Transportblech von einer gemeinsamen Antriebseinrichtung angetrieben.

In Ausführungsformen der Erfindung wird die Antriebseinrichtung mithilfe einer Handkurbel angetrieben.

In Ausführungsformen des erfindungsgemäßen Verfahrens wird das Messer der Schneidevorrichtung mithilfe der Antriebseinrichtung oszillierend angetrieben.

In vorteilhaften Ausführungsformen des erfindungsgemäßen Verfahrens werden die Transportbleche vor dem Einlegen in die Gebäckformmaschine mit einem Backpapier belegt.

In einer Ausführungsform des erfindungsgemäßen Verfahrens wird eine erfindungsgemäße Gebäckformmaschine verwendet.

In den nachfolgend erläuterten Figuren sind beispielhafte Ausführungsformen und Aspekte der Erfindung dargestellt. Es zeigen:
- Figur 1:: Eine perspektivische Ansicht einer erfindungsgemäßen Gebäckformmaschine,
- Figur 2:: Eine perspektivische Ansicht der Formwalze und der Knetwalze,
- Figur 3:: Eine perspektivische Ansicht eines Transferbleches,
- Figur 4:: Eine perspektivische Ansicht des Antriebs und des Transferbleches einer Ausführungsform der Erfindung,
- Figur 5:: Eine Frontalansicht der Darstellung gemäß Figur 4,
- Figur 6:: Eine perspektivische Ansicht des Grundkörpers einer Ausführungsform einer erfindungsgemäßen Gebäckformmaschine,
- Figur 7:: Eine perspektivische Ansicht der Walzenarretierung,
- Figur 8:: Eine Seitenansicht auf die Schneidevorrichtung angeordnet zur Knetwalze,
- Figur 9:: Eine Seitenansicht auf die Schneidevorrichtung mit Einstellschraube,
- Figur 10:: Eine Draufsicht auf die Schneidevorrichtung und
- Figur 11:: Eine perspektivische Ansicht der Wellenscheibe einer Schneidvorrichtung einer Ausführungsform der Erfindung.

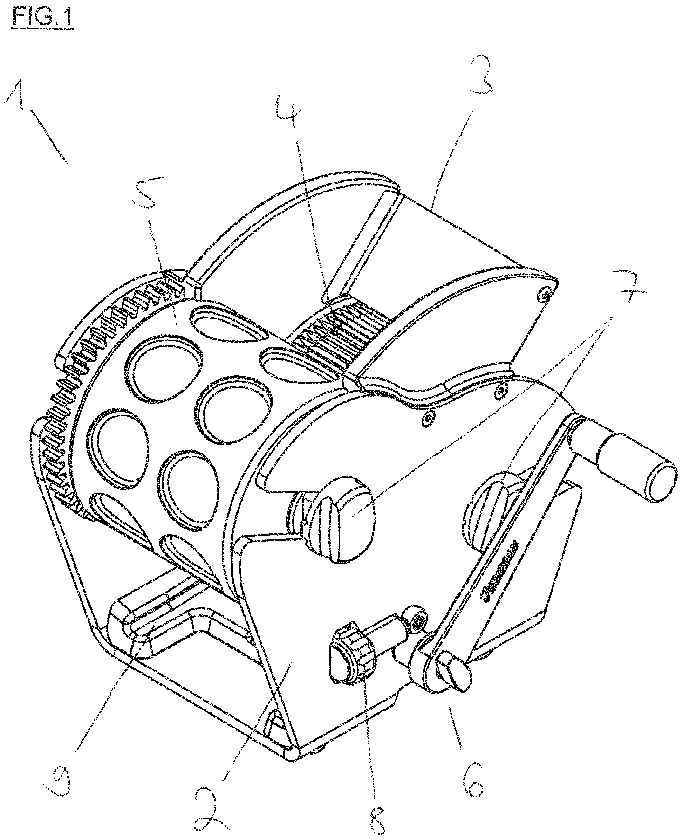

In Figur 1 ist eine perspektivische Ansicht einer erfindungsgemäßen Gebäckformmaschine (1) dargestellt. Die Gebäckformmaschine (1) weist einen Grundkörper (2) auf, an dem eine als ein Teigtrichter ausgebildete Zuführeinrichtung (3) befestigt ist. Weiterhin weist die Gebäckformmaschine (1) eine Knetwalze (4) und eine Formwalze (5) auf.

Der Antrieb (6) ist als eine Handkurbel realisiert.

Die Knetwalze (4) und die Formwalze (5) sind mithilfe einer Walzenarretierung (7) am Grundkörper (2) gelagert.

Seitlich am Grundkörper (2) ist die Verstelleinrichtung (8) für die Schneidevorrichtung erkennbar.

Unterhalb der Knetwalze (5) und der Formwalze (4) ist im Innenraum der Gebäckformmaschine (1) am Boden eine Führungseinrichtung (9) zur Führung von Transportblechen durch die Gebäckformmaschine hindurch angeordnet.

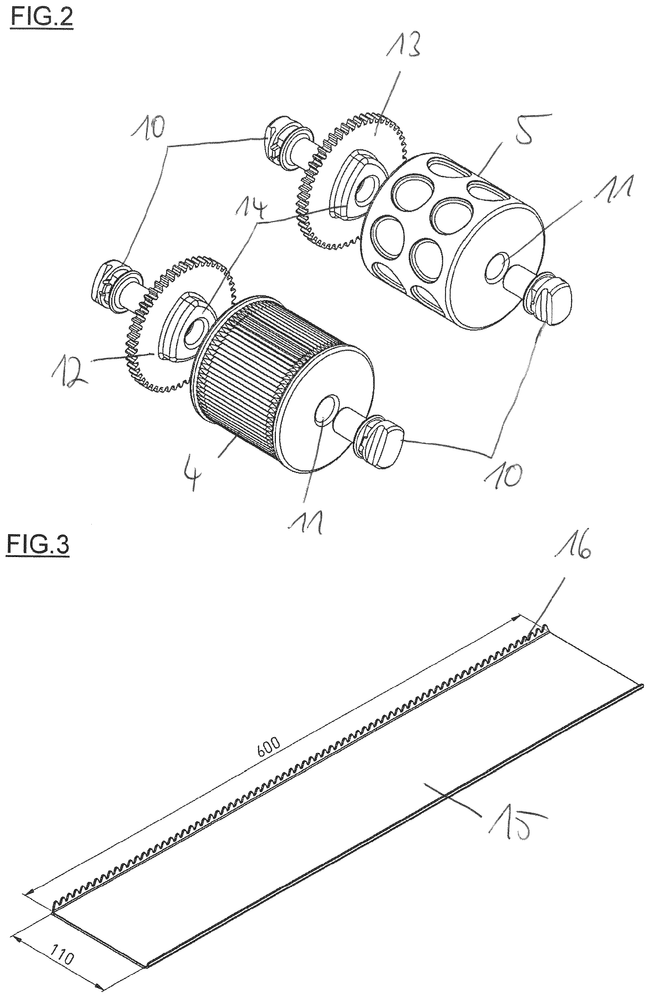

Figur 2 zeigt die Baugruppen einer Knetwalze (4) und einer Formwalze (5) in einer Explosionsansicht.

Jeder der Baugruppen umfasst einen Fixierbolzen (10), der seitlich in Lageröffnungen (11) der Knetwalze (4) bzw. der Formwalze (5) steckbar ist.

Auf einer Seite sind die Knetwalze (4) und die Formwalze (5) mit den korrespondierenden Antrieben (12, 13) verbindbar. Zur Kraftübertragung der Rotationskraft auf die Walzen weisen die Antriebe jeweils eine Kupplung (14) auf, die in Rotationsrichtung zu einem formschlüssigen Eingriff in die jeweilige korrespondierend ausgebildete Walzenwand ausgebildet sind.

Auch die Antriebe (12, 13) sind mit Fixierbolzen (10) verbindbar.

Der Knetwalzenantrieb (12) und der Formwalzenantrieb (13) ist jeweils als ein Zahnrad ausgebildet und mit einem Antrieb (6) koppelbar.

In Figur 3 ist ein Transportblech (15) in einer perspektivischen Ansicht dargestellt. Das Transportblech (15) weist seitlich eine Kopplungseinrichtung (16) auf, die in der gezeigten Ausführungsform als eine Zahnleiste ausgebildet ist. Die eingezeichnete Bemaßung ist lediglich beispielhaft zu verstehen.

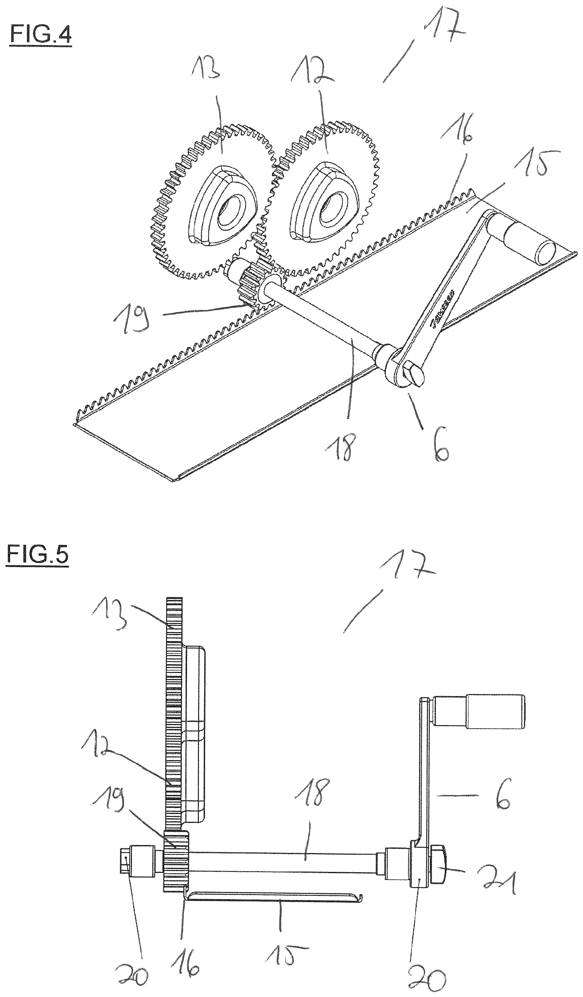

Figur 4 zeigt eine Darstellung der Elemente der Antriebseinrichtung (17) einer erfindungsgemäßen Ausführungsform einer handbetriebenen Gebäckformmaschine (1)

Die Antriebseinrichtung (17) weist eine zentrale Antriebswelle (18) auf, die mit dem als eine Handkurbel ausgebildeten Antrieb (6) gekoppelt ist.

Auf der zentralen Antriebwelle (18) ist ein zentrales Antriebselement (19) angeordnet, das in der gezeigten Ausführungsform als ein Zahnrad realisiert ist.

Das zentrale Antriebselement (6) ist mit der Kopplungseinrichtung (16) des Transportbleches (15) und mit dem Knetwalzenantrieb (12) direkt gekoppelt. Vorliegend greifen die Zähne der jeweiligen Zahnräder bzw. der Zahnleiste ineinander.

Der Formwalzenantrieb (13) ist direkt mit dem Knetwalzenantrieb (12) gekoppelt. Dadurch ist unmittelbar eine gegenläufige Rotation der Knetwalze (4) und der Formwalze (5) sichergestellt.

Durch das Betätigen der Handkurbel im Uhrzeigersinn wird in der gezeigten Ausführungsform das Transportblech (15) in Förderrichtung durch die Gebäckformmaschine (1) hindurch transportiert.

In Figur 5 ist die Antriebseinrichtung (17) gemäß Figur 5 in einer Frontalansicht dargestellt. Erkennbar ist, dass die zentrale Antriebswelle (18) an beiden Enden jeweils eine Verbindungseinrichtung (20) zur Kopplung mit einem Antrieb (6) aufweist.

So ist der Antrieb (6), beispielsweise ausgebildet als die dargestellte Handkurbel, je nach Bedarf auf beiden Seiten der Gebäckformmaschine (1) anzuordnen.

Die Handkurbel ist mithilfe eines Fixierelements (21), vorliegend ausgebildet als eine Flügelschraube, im Bereich der Verbindungseinrichtungen (20) auf der zentralen Antriebswelle (18) fixierbar.

Die Antriebsgeschwindigkeit des Knetwalzenantriebs (12) und des Transportbleches (15) ist in bevorzugten Ausführungsformen der Erfindung identisch, sodass die abgeschnittenen Teiglinge auf dem Transportblech (15) ohne Zerrung oder Stauchung durch unterschiedliche Geschwindigkeiten ablegbar sind. Dies ist durch eine entsprechende Auslegung der Antriebseinheit (17) erreichbar, beispielsweise durch die entsprechende Zahnung der Zahnräder und der Zahnleiste.

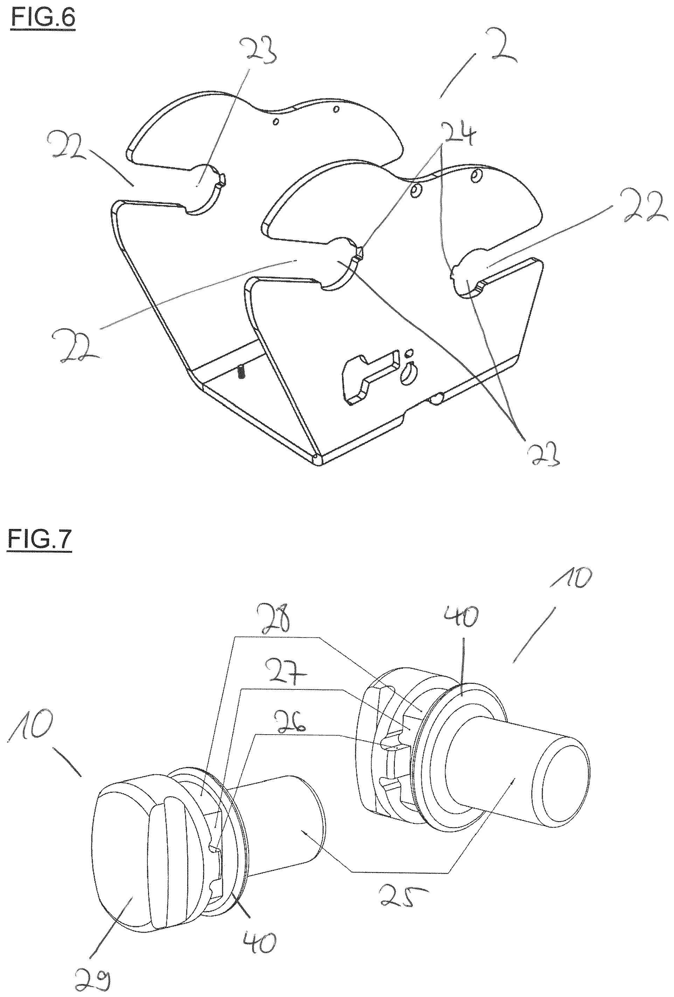

Figur 6 zeigt den Grundkörper (2) einer erfindungsgemäßen Ausführungsform einer Gebäckformmaschine (1). Der Grundkörper (2) bildet den Boden und zwei Seitenwände der Gebäckformmaschine (1) aus.

Im Bereich der Seitenwände sind Führungsschlitze (22) angeordnet, die sich jeweils von einer Montageposition (23) bis zum Rand des Grundkörpers (2) erstrecken, sodass im Bereich der Montageposition (23) ein geschlossenes Ende und auf der anderen Seite ein offenes Ende der Führungsschlitze (22) realisiert ist.

Im Bereich der Montageposition ist die Breite des Führungsschlitzes (23) erweitert und am äußeren Umfang ist eine Rastnut (24) angeordnet.

In Figur 7 sind Fixierbolzen (10) gemäß einer Ausführungsform der Erfindung dargestellt. Die Fixierbolzen (10) weisen eine Lagerfläche (25) für die Lagerung der Walzen, eine Rastnase (26), eine Lauffläche (27) und eine Auflagefläche (28) auf. Der Kopf der Fixierbolzen (10) ist als ein Schraubkopf mit einem Griffelement (29) ausgebildet.

Bei der Montage der Walzen am Grundkörper (2) der Gebäckformmaschine (1) werden die Fixierbolzen (10) mit aufgesteckter Walze und Walzenantrieb durch den Führungsschlitz (22) in die Montageposition (23) geschoben. Dabei sind die Fixierbolzen (10) so ausgerichtet, dass die Laufflächen (27) an den Rändern des Führungsschlitzes (22) entlanglaufen.

In der Montageposition werden die Fixierbolzen (10) so verdreht, dass die jeweilige Rastnase (26) in die jeweilige Rastnut (24) einrastet. Dadurch sind die Fixierbolzen (10) in der Montageposition (23) fixiert und haltern dort die Walzen.

In axialer Richtung sind die Fixierbolzen (10) durch einen Flanschteller (40) und den verbreiterten Kopf an dem Grundkörper (2) gesichert.

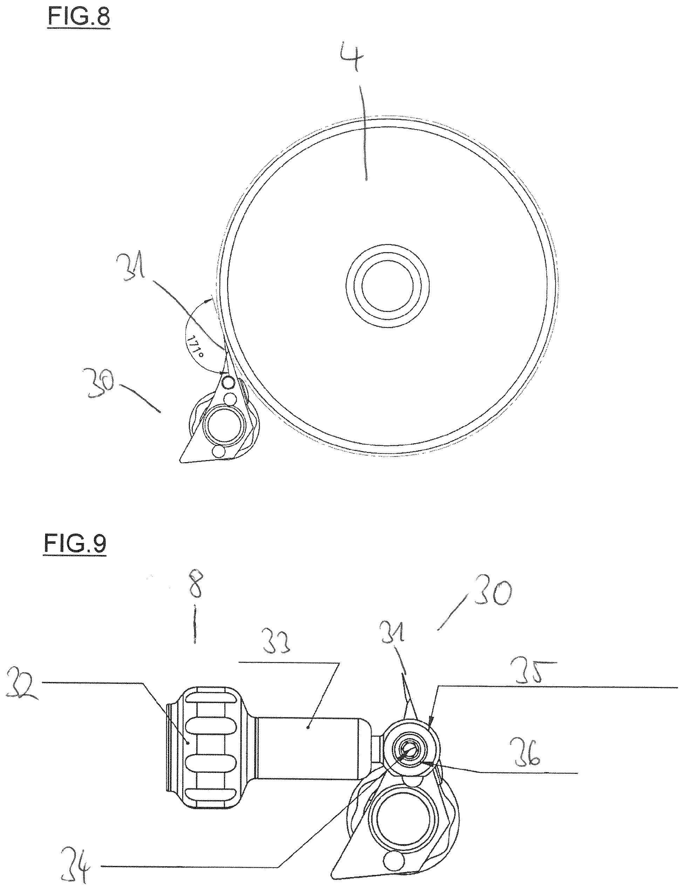

Figur 8 zeigt die Schneidevorrichtung (30) im Bereich der Knetwalze (4). Die Schneidevorrichtung (30) weist ein Messer (31) auf, das in einem definierten Winkel, vorliegend 171°, zur Oberfläche der Knetwalze (4) ausgerichtet ist.

Figur 9 zeigt die Schneidevorrichtung (30) mit einer Verstelleinrichtung (8). Diese weist eine Verstellschraube (32) auf, die in einem mit dem Grundkörper (2) verbundenen Schraubgewinde (33) gelagert ist. Durch die exzentrische Lagerung des Messers (31) ist die Messerposition gegenüber der Knetrolle (4) mithilfe der Verstellschraube (32) verstellbar, ohne dass der Schneidwinkel wesentlich verstellt wird.

Das Messer (31) ist mithilfe eines Linearlagerbolzens (34) in einem Gleitlager (36) axial beweglich gelagert, sodass ein beweglicher Lagerpunkt (35) realisiert ist.

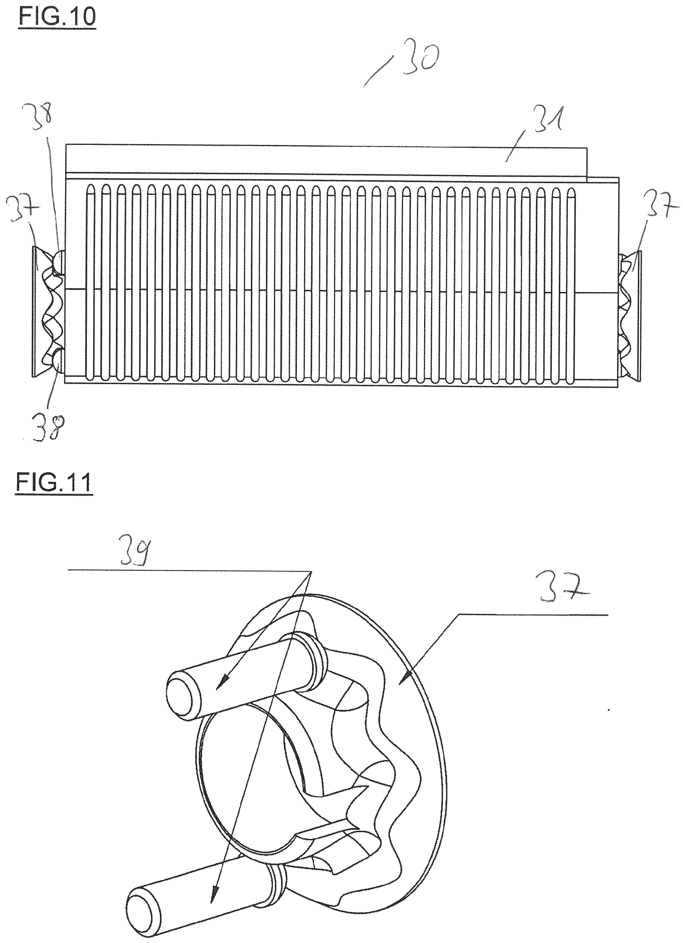

In Figur 10 ist eine Draufsicht auf die Baugruppe der Schneidvorrichtung (30) dargestellt. Die Schneidvorrichtung weist seitlich zwei drehbare Wellenscheiben (37) auf, die ein regelmäßiges wellenförmiges Profil aufweisen. Die Wellenscheiben (37) sind gegenüberliegend so angeordnet, dass sich jeweils Wellenberge und Wellentäler gegenüberliegen. Am Körper der Schneidevorrichtung (30) sind Gleitnasen (38) angeordnet, die jeweils in das Wellenprofil der Wellenscheiben (37) ragen. Bei einer Rotation der Wellenscheiben (37) wird das Messer (31) somit in axialer Richtung zwischen den Wellenscheiben (37) hin und her geschoben, sodass eine Oszillation des Messers (31) realisiert wird.

Die Wellenscheiben (37) sind in bevorzugten Ausführungsformen der Erfindung mit dem Antrieb (6) und/oder der Antriebseinrichtung (17) gekoppelt.

In alternativen Ausführungsformen der Erfindung wäre beispielsweise auch die Anordnung einer Wellenscheibe (37) nur auf einer Seite der Schneidevorrichtung (30) und eine gefederte Lagerung auf der anderen Seite möglich.

In Figur 11 ist eine perspektivische Ansicht einer Wellenscheibe (37) gemäß einer Ausführungsform der Erfindung dargestellt.

Aus der Basis mit dem Wellenprofil heraus erstrecken sich in axialer Richtung zwei Führungsbolzen (39), auf denen der Körper der Schneidevorrichtung (30) axial beweglich lagerbar ist. Seitlich am Körper der Schneidevorrichtung (30) sind in entsprechenden Ausführungsformen der Erfindung ringförmige Nuten angeordnet, in denen die Führungsbolzen (39) laufen können ohne, dass die Rotationsbewegung der mindestens einen Wellenscheibe (37) auf den Körper der Schneidevorrichtung (30) übertragen wird.

In Ausführungsformen der Erfindung ist die mindestens eine Wellenscheibe (37) derart ausgebildet, dass je Umdrehung 8 Hübe mit einem Hub von etwa 2,5 mm realisiert werden. Dies ist durch die Anzahl der Wellen und die Höhe der Wellen der Wellenscheibe(n) (37) einstellbar.

## Patentansprüche

1. Gebäckformmaschine (1) aufweisend mindestens eine Zuführeinrichtung (3), eine mindestens eine Knetwalze (4) und mindestens eine Formwalze (5) umfassende Formvorrichtung, eine Schneidvorrichtung (30), eine Transportvorrichtung und eine Antriebseinrichtung (17), wobei ein Teig mithilfe der Zuführeinrichtung (3) in den Bereich der Formvorrichtung zuführbar ist und wobei die Knetwalze (4) und die Formwalze (5) gegenläufig jeweils um ihre Längsachse rotierbar und in einem gewissen Abstand mit parallelen Rotationsachsen zueinander angeordnet sind, wobei durch die Rotation der Knetwalze (4) ein Teigband um deren Mantelfläche ausbildbar ist, dessen Stärke durch den Abstand von der Knetwalze (4) und der Formwalze (5) bestimmt ist, und wobei die Formwalze (5) im Bereich ihrer Mantelfläche mindestens eine Ausnehmung bzw. Vertiefung aufweist, die als Form und somit als Negativ für die aus dem Teig zu formenden Teiglinge dient, und wobei in Rotationsrichtung der Knetwalze (4) hinter der Formwalze (5) ein oszillierbares Messer der Schneidevorrichtung (30) angeordnet ist, das eine Schneidkante in Längsrichtung der Knetwalze (4) parallel zum nächstliegenden Abschnitt der Mantelfläche der Knetwalze (4) aufweist, sodass mithilfe des Messers die durch die Formen der Formwalze auf das Teigband aufgebrachten Teig-Positive vom Teigband herunterschneidbar sind, wobei die Transportvorrichtung mindestens ein Transportblech (15) (15) umfasst, auf dem die mithilfe der Schneidvorrichtung (30) geschnittenen Teiglinge in der Gebäckformmaschine (1) ablegbar sind, wobei das Transportblech (15) eine seitlich auf dem, seitlich an dem oder unter dem Transportblech (15) angeordnete Kopplungsvorrichtung (16) zur Kopplung mit der Antriebseinrichtung (17) aufweist, wobei das Transportblech (15) als Backblech verwendbar und/oder mit einem Backpapier belegbar ist, und wobei die mindestens eine Antriebseinrichtung (17) zur gegenläufigen Rotation der Knetwalze (4) und der Formwalze (5) und zum linearen Antrieb des mindestens einen Transportbleches (15) ausgebildet ist.

2. Gebäckformmaschine (1) nach Anspruch 1, **dadurch gekennzeichnet, dass** diese eine im Innenraum der Gebäckformmaschine (1) am Boden angeordnete Führungseinrichtung (9) für Transportbleche (15) aufweist.

3. Gebäckformmaschine (1) nach einem der vorstehenden Ansprüche, **dadurch gekennzeichnet, dass** die Kopplungsvorrichtung (16) als eine Zahnleiste ausgebildet ist, die mit einem Zahnrad des Antriebs der Transportvorrichtung gekoppelt ist.

4. Gebäckformmaschine (1) nach einem der vorstehenden Ansprüche, **dadurch gekennzeichnet, dass** diese mit einer Handkurbel antreibbar ist.

5. Gebäckformmaschine (1) nach einem der vorstehenden Ansprüche, **dadurch gekennzeichnet, dass** die Schneidevorrichtung (30) zum oszillierenden Antrieb eines Messers (31) ausgebildet ist.

6. Gebäckformmaschine (1) nach Anspruch 5, **dadurch gekennzeichnet, dass** der Messerantrieb mindestens eine Wellenscheibe (37) aufweist, durch deren Rotation das Messer (31) linear zur Realisierung der Oszillation antreibbar ist.

7. Gebäckformmaschine (1) nach einem der Ansprüche 5 und 6, **dadurch gekennzeichnet, dass** der Messerantrieb mit der Antriebseinheit für die Walzen und/oder die Transportvorrichtung gekoppelt ist.

8. Gebäckformmaschine (1) nach einem der vorstehenden Ansprüche, **dadurch gekennzeichnet, dass** die Knetwalze (4) und die Formwalze (5) jeweils mit einer Walzenarretierung (7) am Grundkörper der Gebäckformmaschine (1) drehbar gelagert befestigbar sind, wobei die Walzenarretierung (7) Fixierbolzen (10) aufweist, die über Führungsschlitze (22) in den Seitenwänden der Gebäckformmaschine (1) in die Montageposition (23) führbar und dort fixierbar sind.

9. Gebäckformmaschine (1) nach Anspruch 8, **dadurch gekennzeichnet, dass** mithilfe der Fixierbolzen (10) Kunststoffgleitlager zur Lagerung der Knetwalze (4) und der Formwalze (5) realisiert sind.

10. Verfahren zur Gebäckformung mithilfe einer Gebäckformmaschine (1) gemäß einem der Ansprüche 1 bis 9 umfassend zumindest die folgenden Verfahrensschritte:
a. Zuführen von Teig in die Zuführeinrichtung (3) der Gebäckformmaschine (1),
b. Antreiben der Gebäckformmaschine (1) mithilfe eines Antriebs (6),
c. Einlegen eines Transportbleches (15) in eine Gebäckformmaschine (1),
d. Förderung des Transportbleches (15) durch die Gebäckformmaschine (1) hindurch,
e. Formung von Teiglingen mithilfe einer Knetwalze (4), einer Formwalze (5) und einer Schneidevorrichtung (30) der Gebäckformmaschine (1),
f. Ablegen der Teiglinge auf dem Transportblech (15).

11. Verfahren nach Anspruch 10, **dadurch gekennzeichnet, dass** die Antriebseinrichtung (17) mithilfe einer Handkurbel angetrieben wird.

12. Verfahren nach einem der Ansprüche 10 und 11, **dadurch gekennzeichnet, dass** das Messer (31) der Schneidevorrichtung (30) mithilfe der Antriebseinrichtung (17) oszillierend angetrieben wird.

## Claims

1. Pastry forming machine (1) comprising at least one feed device (3), a forming device comprising at least one kneading roller (4) and at least one forming roller (5), a cutting device (30), a transport device and a drive device (17), wherein a dough can be fed into the region of the forming device with the aid of the feeding device (3) and wherein the kneading roller (4) and the forming roller (5) can each rotate in opposite directions about their longitudinal axis and are arranged at a certain distance from one another with parallel axes of rotation, wherein the rotation of the kneading roller (4) enables to form a band of dough around its circumferential surface, the thickness of which is determined by the distance between the kneading roller (4) and the forming roller (5), and wherein the forming roller (5) has at least one recess or depression in the region of its circumferential surface, which recess or depression which serves as a mold and thus as a negative for the dough pieces to be formed from the dough, and wherein an oscillatable knife of the cutting device (30) is arranged behind the forming roller (5) in the direction of rotation of the kneading roller (4), which has a cutting edge in the longitudinal direction of the kneading roller (4) parallel to the nearest section of the lateral surface of the kneading roller (4), so that the dough positives applied to the band of dough by the molds of the forming roller can be cut off the band of dough with the aid of the knife, the transport device comprising at least one transport tray (15), on which the dough pieces cut with the aid of the cutting device (30) can be deposited in the pastry forming machine (1), the transport tray (15) having a coupling device (16) arranged laterally on, laterally at or under the transport tray (15) for coupling to the drive device (17), wherein the transport tray (15) can be used as a baking tray and/or can be covered with a baking paper, and wherein the at least one drive device (17) is designed for counter-rotation of the kneading roller (4) and the forming roller (5) and for linear drive of the at least one transport tray (15).

2. Pastry forming machine (1) according to claim 1, **characterized in that** it has a guide device (9) for transport trays (15) arranged on the floor in the interior of the pastry forming machine (1).

3. Pastry forming machine (1) according to one of the preceding claims, **characterized in that** the coupling device (16) is designed as a toothed bar which is coupled to a gearwheel of the drive of the transport device.

4. Pastry forming machine (1) according to one of the preceding claims, **characterized in that** it can be driven by a hand crank.

5. Pastry forming machine (1) according to one of the preceding claims, **characterized in that** the cutting device (30) is designed for the oscillating drive of a knife (31).

6. Pastry forming machine (1) according to claim 5, **characterized in that** the knife drive has at least one shaft disc (37), by the rotation of which the knife (31) can be driven linearly to realize the oscillation.

7. Pastry forming machine (1) according to one of claims 5 and 6, **characterized in that** the knife drive is coupled to the drive unit for the rollers and/or the transport device.

8. Pastry forming machine (1) according to one of the preceding claims, **characterized in that** the kneading roller (4) and the forming roller (5) can each be rotatably mounted on the base body of the pastry forming machine (1) by means of a roller locking device (7), the roller locking device (7) having fixing bolts (10) which can be guided into the mounting position (23) via guide slots (22) in the side walls of the pastry forming machine (1) and can be fixed there.

9. Pastry forming machine (1) according to claim 8, **characterized in that** plastic plain bearings for mounting the kneading roller (4) and the forming roller (5) are implemented with the aid of the fixing bolts (10).

10. Method of pastry forming using a pastry forming machine (1) according to any one of claims 1 to 9, comprising at least the following method steps:
a. Feeding dough into the feeding device (3) of the pastry forming machine (1),
b. Driving the pastry forming machine (1) with the aid of a drive (6),
c. Inserting a transport tray (15) into the pastry forming machine (1),
d. Conveying the transport tray (15) through the pastry forming machine (1),
e. Forming of dough pieces by means of a kneading roller (4), a forming roller (5) and a cutting device (30) of the pastry forming machine (1),
f. Placing the dough pieces on the transport tray (15).

11. Method according to claim 10, **characterized in that** the drive device (17) is driven by means of a hand crank.

12. Method according to one of claims 10 and 11, **characterized in that** the knife (31) of the cutting device (30) is driven in an oscillating manner with the aid of the drive device (17).

## Revendications

1. Machine de façonnage de pâtisseries (1) présentant au moins un appareil d'amenée (3), un dispositif de façonnage comprenant au moins un rouleau de pétrissage (4) et au moins un rouleau de façonnage (5), un dispositif de coupe (30), un dispositif de transport et un appareil d'entraînement (17), une pâte pouvant être amenée dans la zone du dispositif de façonnage à l'aide de l'appareil d'amenée (3), et le rouleau de pétrissage (4) et le rouleau de façonnage (5) pouvant tourner en sens inverse autour de leur axe longitudinal respectif et étant agencés à une certaine distance l'un de l'autre avec des axes de rotation parallèles, la rotation du rouleau de pétrissage (4) permettant de réaliser une bande de pâte autour de sa surface d'enveloppe, dont l'épaisseur est déterminée par la distance entre le rouleau de pétrissage (4) et le rouleau de façonnage (5), et le rouleau de façonnage (5) présentant, dans la zone de sa surface d'enveloppe, au moins un évidement ou creux qui sert de moule et donc de négatif pour les pâtons à façonner à partir de la pâte, et une lame oscillante du dispositif de coupe (30) étant agencée derrière le rouleau de façonnage (5) dans la direction de rotation du rouleau de pétrissage (4), qui présente un bord de coupe dans la direction longitudinale du rouleau de pétrissage (4) parallèlement à la section la plus proche de la surface d'enveloppe du rouleau de pétrissage (4), de telle sorte qu'à l'aide de la lame, les positifs de pâte appliqués sur la bande de pâte par les moules du rouleau de façonnage peuvent être découpés vers le bas de la bande de pâte, le dispositif de transport comprenant au moins une plaque de transport (15) (15), sur laquelle les pâtons découpés à l'aide du dispositif de coupe (30) peuvent être déposés dans la machine de façonnage de pâtisseries (1), la plaque de transport (15) présentant un dispositif de couplage (16) agencé latéralement sur, latéralement au niveau de ou sous la plaque de transport (15) pour le couplage avec l'appareil d'entraînement (17), la plaque de transport (15) pouvant être utilisée en tant que plaque de cuisson et/ou pouvant être recouverte d'un papier de cuisson, et l'au moins un appareil d'entraînement (17) étant réalisé pour la rotation en sens inverse du rouleau de pétrissage (4) et du rouleau de façonnage (5) et pour l'entraînement linéaire de l'au moins une plaque de transport (15).

2. Machine de façonnage de pâtisseries (1) selon la revendication 1, **caractérisée en ce que** celle-ci présente un appareil de guidage (9) pour des plaques de transport (15) agencé au sol dans l'espace intérieur de la machine de façonnage de pâtisseries (1).

3. Machine de façonnage de pâtisseries (1) selon l'une quelconque des revendications précédentes, **caractérisée en ce que** le dispositif de couplage (16) est réalisé sous la forme d'une crémaillère qui est couplée à une roue dentée de l'entraînement du dispositif de transport.

4. Machine de façonnage de pâtisseries (1) selon l'une quelconque des revendications précédentes, **caractérisée en ce que** celle-ci peut être entraînée par une manivelle.

5. Machine de façonnage de pâtisseries (1) selon l'une quelconque des revendications précédentes, **caractérisée en ce que** le dispositif de coupe (30) est réalisé pour l'entraînement oscillant d'une lame (31).

6. Machine de façonnage de pâtisseries (1) selon la revendication 5, **caractérisée en ce que** l'entraînement de lame présente au moins un disque ondulé (37), par la rotation duquel la lame (31) peut être entraînée linéairement pour réaliser l'oscillation.

7. Machine de façonnage de pâtisseries (1) selon l'une quelconque des revendications 5 et 6, **caractérisée en ce que** l'entraînement de lame est couplé à l'unité d'entraînement pour les rouleaux et/ou le dispositif de transport.

8. Machine de façonnage de pâtisseries (1) selon l'une quelconque des revendications précédentes, **caractérisée en ce que** le rouleau de pétrissage (4) et le rouleau de façonnage (5) peuvent être fixés chacun en étant montés de manière rotative sur le corps de base de la machine de façonnage de pâtisseries (1) avec un blocage de rouleaux (7), le blocage de rouleaux (7) présentant des boulons de fixation (10) qui peuvent être guidés dans la position de montage (23) par l'intermédiaire de fentes de guidage (22) dans les parois latérales de la machine de façonnage de pâtisseries (1) et y être fixés.

9. Machine de façonnage de pâtisseries (1) selon la revendication 8, **caractérisée en ce qu'**à l'aide des boulons de fixation (10), des paliers lisses en matière plastique sont réalisés pour le montage du rouleau de pétrissage (4) et du rouleau de façonnage (5).

10. Procédé de façonnage de pâtisseries à l'aide d'une machine de façonnage de pâtisseries (1) selon l'une quelconque des revendications 1 à 9, comprenant au moins les étapes de procédé suivantes :
a. l'amenée de pâte dans l'appareil d'amenée (3) de la machine de façonnage de pâtisseries (1),
b. l'entraînement de la machine de façonnage de pâtisseries (1) à l'aide d'un entraînement (6),
c. la mise en place d'une plaque de transport (15) dans une machine de façonnage de pâtisseries (1),
d. le transport de la plaque de transport (15) à travers la machine de façonnage de pâtisseries (1),
e. le façonnage de pâtons à l'aide d'un rouleau de pétrissage (4), d'un rouleau de façonnage (5) et d'un dispositif de coupe (30) de la machine de façonnage de pâtisseries (1),
f. le dépôt des pâtons sur la plaque de transport (15).

11. Procédé selon la revendication 10, **caractérisé en ce que** l'appareil d'entraînement (17) est entraîné à l'aide d'une manivelle.

12. Procédé selon l'une quelconque des revendications 10 et 11, **caractérisé en ce que** la lame (31) du dispositif de coupe (30) est entraînée de manière oscillante à l'aide de l'appareil d'entraînement (17).
